# EUROPEAN PATENT APPLICATION

(11) **EP 4 159 295 A1**
(43) Date of publication of application: **05.04.2023**
(21) Application number: 21200671.2
(22) Date of filing: 04.10.2021
(51) Int. Cl.: B01D 29/35, B01D 29/90

(54) **A FILTER DEVICE FOR A WASTE STREAM FROM A SINK**

(71) Applicant: Van Uffelen, Bart, 3881 TS Putten (NL)
(72) Inventor: Van Uffelen, Bart, 3881 TS Putten (NL)
(74) Representative: Plaggenborg, Menko Bernard

(57) **Abstract**

The invention relates to a filter device for removing solid material from an aqueous waste stream from a sink, comprising a water permeable filter element, wherein the filter element has an inlet for receiving the aqueous waste stream to be filtered, a first outlet for the filtered water and a second outlet for the solid material filtered from the aqueous waste stream to be filtered, characterized in that the filter device has a chamber with a substantial cylindrical cross section and wherein the inlet is offset with respect to a radius of the central axis of the chamber such that the aqueous waste stream to be filtered is guided along at least part of an inside of said wall in a circular motion, and wherein said aqueous waste stream to be filtered at least partly flows over the water-permeable filter element in a circular motion. Another embodiment of the invention relates to a kitchen sink collection device for collecting solid material flushed with an aqueous waste stream from a sink, comprising the device according to the invention, further comprising a first container with a liquid outlet at a bottom and an inlet at a top, and embodied for inserting and removing a solid material collecting container comprising an opening at its top for receiving the solid material filtered from the aqueous waste stream to be filtered, and comprising a perforated bottom for removing water entered the solid material collecting container and retaining said solid material on its bottom.

## Description

The present invention relates to a filter device comprising the features as mentioned in the preamble of claim 1.

It is known in the art to flush solid material through a sink together with a waste water stream. Such often leads to clogging of the sewer and piping system. For that reason, grinders are installed to reduce the size of the waste. However, that still may lead to clogging and thus is not an optimum solution.

It is known to install a centrifugal filter to separate ground waste from the waste water, wherein the filter is spun around at high speed like a centrifuge.

This, however, leads to other disadvantages. The sound of a centrifugal filter is very loud and extremely annoying. Also, an electrical power supply is required. Furthermore, since the water is pushed through the filter openings at high pressure, leading the solid waste to become stuck in the filter openings, the filter of a centrifugal filter may become clogged easily. Due to the fact that a centrifugal filter only allows small filter openings, it is very difficult to clean a centrifugal filter thoroughly.

The invention aims at providing an improved filter of the kind mentioned in the preamble.

The invention further aims at providing a filter that yields a good separation without additional noise.

The invention also aims at providing a filter that yields a good separation without requiring an electrical power supply.

Furthermore, the invention further aims at providing a filter that allows easy cleaning.

So as to obtain at least one of the above mentioned aims, the invention provides a filter device as mentioned in claim 1. This filter device has the advantage that solid material is completely removed from the waste water that is flushed away through a sink.

Also, the filter device according to the invention does not require a grinder as mentioned above. In addition, this separation is obtained without requiring a power supply. Hence, the present invention provides an environmentally friendly solution. Such synergistic effect is a huge advantage.

The invention therefore relates to a filter device for removing solid material from an aqueous waste stream from a sink, comprising a water permeable filter element, wherein the filter element has an inlet for receiving the aqueous waste stream to be filtered, a first outlet for the filtered water and a second outlet for the solid material filtered from the aqueous waste stream to be filtered, characterized in that the filter device has a chamber with a substantial cylindrical cross section and wherein the inlet is offset with respect to a radius of the central axis of the chamber such that the aqueous waste stream to be filtered is guided along at least part of an inside of said wall in a circular motion, and wherein said aqueous waste stream to be filtered at least partly flows over the water-permeable filter element in a circular motion. This device provides advantages as mentioned above since a relatively long flow path over the filter element is provided due to the circular motion of the water to be filtered. As a result, the total height of the filter element is limited with respect to a filter element wherein the aqueous waste stream only flows downward due to gravitational force. The circular motion also provides a larger driving force for pressing the water through the openings in the filter element.

In order to obtain an optimum circular motion, the inside of the wall is provided with guiding means for guiding said aqueous waste stream to be filtered in a preferred direction.

The inlet may be provided in or near a top side of the chamber, but it is preferably situated in a side wall of the chamber, since such position yields an optimum circular motion.

Ease of use is obtained when the filter element is a removable element. This allows a user to easily remove the filter element for cleaning or replacement purposes.

The filter element is easily cleanable if it is made of stainless steel.

A cost effective embodiment is obtained when the filter element is made of plastic. Such element is easily replaceable at low costs. In addition, such embodiment allows a user to choose between different filter elements, for example for use in a kitchen sink or a bathroom sink, where different kinds of materials are to be filtered out of the aqueous waste stream.

If the filter device is used in a kitchen sink, mainly filtering biological waste from the aqueous waste stream, the filter element is preferably made of a biodegradable material, since the used filter element may be disposed of with the regular organic waste.

An optimum motion of the aqueous waste stream over the filter element is obtained when the filter element has a relatively wide cross section at a position near the inlet and a relatively smaller cross section at a position near the outlet for the solid material. This provides a long a secure flow path of the aqueous waste stream.

According to a preferred embodiment, the filter element has a conical shape, tapering towards the second outlet for the solid material.

According to another preferred embodiment, the filter element has a substantially paraboloid shape, tapering towards the second outlet for the solid material.

According to a further embodiment, the invention relates to a device according to the invention, for installation in a kitchen cabinet.

In accordance with another embodiment, the invention relates to a kitchen sink collection device for collecting solid material flushed with an aqueous waste stream from a sink, comprising the device according to any of claims 1-10, further comprising a first container with a bottom and a top, comprising a liquid outlet at the bottom and an inlet at the top, and with an opening for inserting and removing a solid material collecting container, wherein the solid material collecting container has a bottom and a top, comprising an opening at its top for cooperation with the second outlet for the solid material filtered from the aqueous waste stream to be filtered, and comprising a perforated bottom for removing water entered the solid material collecting container through said second outlet through said perforations by gravitational force and retaining said solid material on said bottom. This kitchen sink collection device provides the huge advantage that solid waste materials are easily collected without any need of a separate power connection or a rotating apparatus or another apparatus with moving elements. The collection device according to this embodiment thus provides a reliable collection device separating water and solid materials effectively.

Preferably, the solid material collecting container has a water permeable removable liner, wherein the water permeable liner covers the perforated bottom only, or covers the bottom and at least part of side walls of the tray. Solid materials can thus be easily thrown away leaving a clean collection tray that needs no cleaning.

For ease of use, the water permeable liner is preferably embodied for single use.

Even more preferably, the water permeable liner is biodegradable, so as to be able to throw away the liner and solid material with green waste.

The liner may be manufactured from a woven, a non-woven or a knitted material, allowing water to pass through and to retain solid material on the liner.

The combinatino of liner and solid material can for example be easily thrown away with green waste when the liner is manufactured from an organic material.

Hereafter, the invention will be further described by means of a drawing. The drawing shows in:
Fig. 1 a schematic top view of the device according to the invention,
Fig. 2 a schematic side view of the device according to Fig. 1,
Fig. 3 a schematic cross section of a device according to Fig. 1 with a collection tray, and
Fig. 4 and Fig. 5 a schematic side view of the collection tray.

The same and similar parts and features have been denoted by the same reference numerals in the figures. However, for ease of understanding the figures, not all parts that are required for a practical embodiment have been shown in the figures.

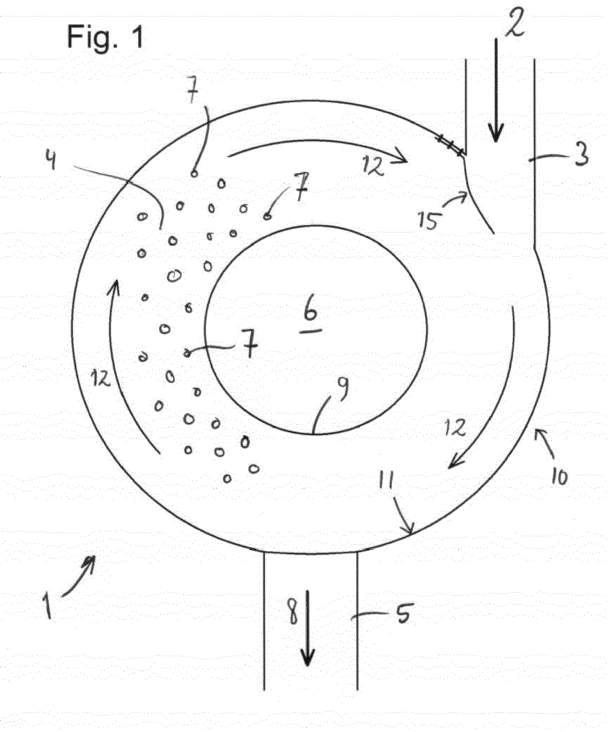

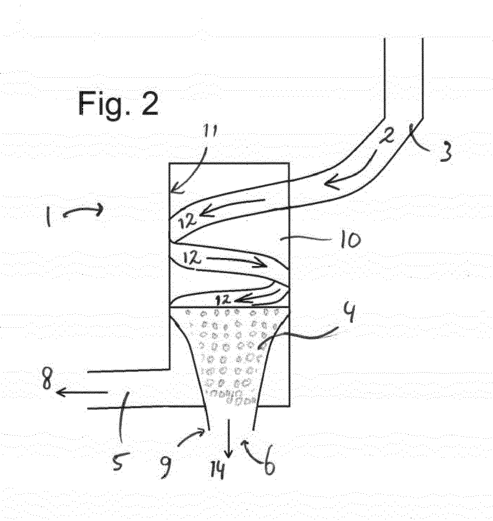

Fig. 1 shows a schematic top view of a filter device 1 for removing solid material from an aqueous waste stream 2. The aqueous waste streams 2 flows towards the device 1 through a pipe 3 and may be derived from a sink (not shown). The filter device 1 comprises a water permeable filter element 4, which is more clearly shown in Fig. 2. The filter device 1 further comprises an water outlet 5 for filtered water 8 and an outlet 6 for filtered solid material 13.

The combined waste stream of water 8 and solid material 13 is separated in a water stream 8 that flows through the openings 7 in the filter element 4. The filtered water 8 then exits the device 1 through outlet 5. The solid material 13 is left at the filter element 4 when the water exits through the openings 7. However, every further amount of aqueous waste stream 2 will transport the said solid material 13 a little further on the filter element 4 until the solid material reaches the end 9 of the filter element 4. It then falls down by gravitational force in a collection tray or the like that may be emptied from time to time.

The filter element 4 is incorporated in a chamber 10 with a wall 11 where the aqueous waste stream 2 is guided in a circular motion. This circular motion is shown in Fig. 1 and Fig. 2 by arrows 12. A guiding element 14 is provided near the inlet 3, at such position that the aqueous waste stream 2 hits the guiding element 14 and is directed parallel with the wall 11 of the chamber. As a consequence, a circular motion 12 of the aqueous waste stream 2 along the circular wall 11 is induced automatically. This circular motion 12 ensures that the aqueous waste stream 2 will travel a longer path on the filter element 4 than when it would stream in a natural gravitational force induced motion from the pipe 3 to the outlet 6. Without the circular motion 12 most water would leave the chamber 10 through outlet 6 instead of exiting through the filter openings 7.

It is clear that a substantial of=r completely circular wall 11 provides a highest grade of circular motion to the aqueous waste stream 2. However, in practice, an ellipsoid shape of the chamber 10 may be sufficient for providing the circular motion 12.

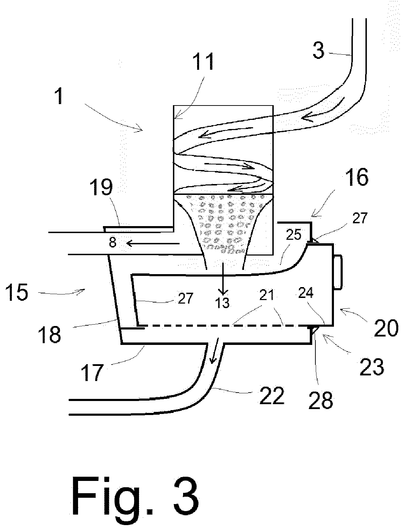

Fig. 3 shows a combination of a device 1 according to the invention incorporated in a kitchen sink collection device 15 for collecting solid material 13 flushed with an aqueous waste stream 2 from a sink.

The kitchen sink collection device 15 comprises a body 16 with a bottom 17 and walls 18 as well as a top part 19, defining an inner space for receiving therein a removable tray 20 through side opening 23. The inner tray is open at its top for receiving solid material 13 from the outlet 6 of the device 1 according to the present invention. The tray's bottom has perforations 21 for removing water that enters the tray 20 together with the solid material 13 into a discharge line 22. The water removed through water outlet 5 from the perforations in the filter device 4 can optionally be combined with the discharge line 22.

In other words, Fig. 3 shows a filter device 1 for substantially removing solid material from an aqueous waste stream 2. The aqueous waste streams 2 flows towards the device 1 through a pipe 3 and may be derived from a sink (not shown) . The filter device comprises a water permeable filter element 4. The filter device 1 is incorporated in a body 16 with a bottom 17, walls 18 and a top 19. At its top 19, the body 16 receives solid material 13 from the outlet 6 of the device 1. At its bottom 17, the body 16 comprises a liquid outlet or discharge line 22. Furthermore, an opening 23 is provided in the body 16 for inserting and removing the tray 20.

The solid material collecting container or tray 20 has a bottom 24 and a top 25, comprising an opening at its top 25 for cooperation with the outlet 6 of the device 1 for receiving solid material, and comprises a perforated bottom 24 for removing water through said perforations 21 by gravitational force and retaining said solid material on said perforated bottom 24.

The tray 20 has side walls that extend upward from the bottom 24 towards the top 25. In the embodiment shown in Fig. 3, the walls end at the top 25, such that no upper covering is provided in this embodiment.

The bottom 24 of the tray 20 is positioned at least 1 cm above the bottom 17 of the body 16.

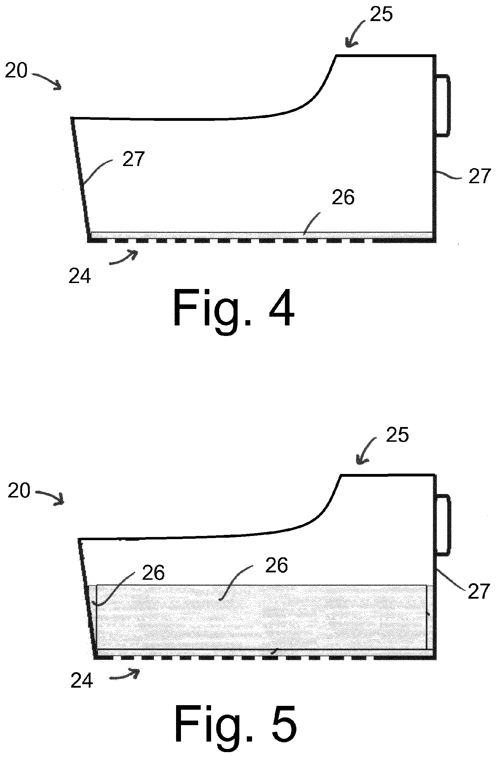

A liner 26 may be placed on the perforated bottom 24, as shown in Fig. 4. The liner 26 must be water permeable so as to allow removal of water from the tray 20 and through the perforated bottom 24. Preferably, this is a removable liner 26 so as to be able to dispose of it together with solid matter removed from the tray 20.

The liner 26 can be embodied for covering the perforated bottom 24 only, or for covering the bottom 24 and at least part of side walls 27 of the tray 20, as shown in Fig. 5.

Finally, it is shown in Fig. 3 that a deformable seal 28 is provided at the edge surrounding the opening 23 for providing an odorless closure between the body 16 and the tray 20.

The invention also relates to all combinations of features described here independently of each other.

The invention is not limited to the embodiments as mentioned above and as shown in the drawings. The invention is limited by the claims only.

## Claims

1. A filter device for removing solid material from an aqueous waste stream from a sink, comprising a water permeable filter element, wherein the filter element has an inlet for receiving the aqueous waste stream to be filtered, a first outlet for the filtered water and a second outlet for the solid material filtered from the aqueous waste stream to be filtered, **characterized in that** the filter device has a chamber with a substantial cylindrical cross section and wherein the inlet is offset with respect to a radius of the central axis of the chamber such that the aqueous waste stream to be filtered is guided along at least part of an inside of said wall in a circular motion, and wherein said aqueous waste stream to be filtered at least partly flows over the water-permeable filter element in a circular motion.

2. A device according to claim 1, wherein the inside of the wall is provided with guiding means for guiding said aqueous waste stream to be filtered in a preferred direction.

3. A device according to claim 1, wherein the inlet is situated in a side wall of the chamber.

4. A device according to claim 1, wherein the filter element is a removable element.

5. A device according to claim 1, wherein the filter element is made of stainless steel.

6. A device according to claim 1, wherein the filter element is made of plastic.

7. A device according to claim 1, wherein the filter element is made of a biodegradable material.

8. A device according to claim 1, wherein the filter element has a relatively wide cross section at a position near the inlet and a relatively smaller cross section at a position near the outlet for the solid material.

9. A device according to claim 8, wherein the filter element has a conical shape, tapering towards the second outlet for the solid material.

10. A device according to claim 8, wherein the filter element has a substantially paraboloid shape, tapering towards the second outlet for the solid material.

11. A device according to any of the previous claims, for installation in a kitchen cabinet.

12. A kitchen sink collection device for collecting solid material flushed with an aqueous waste stream from a sink, comprising the device according to any of claims 1-10, further comprising a first container with a bottom and a top, comprising a liquid outlet at the bottom and an inlet at the top, and with an opening for inserting and removing a solid material collecting container, wherein the solid material collecting container has a bottom and a top, comprising an opening at its top for cooperation with the second outlet for the solid material filtered from the aqueous waste stream to be filtered, and comprising a perforated bottom for removing water entered the solid material collecting container through said second outlet through said perforations by gravitational force and retaining said solid material on said bottom.

13. A kitchen sink collection device according to claim 12, wherein the solid material collecting container has a water permeable removable liner, wherein the water permeable liner covers the perforated bottom only, or covers the bottom and at least part of side walls of the tray.

14. A kitchen sink collection device according to claim 13, wherein the water permeable liner is for single use.

15. A kitchen sink collection device according to claim 13 or 14, wherein the water permeable liner is biodegradable.

16. A kitchen sink collection device according to any of claims 13 to 15, wherein the liner is manufactured from a woven, a non-woven or a knitted material.

17. A kitchen sink collection device according to any of claims 13 to 18, wherein the liner is manufactured from an organic material.
